(19) **Europäisches Patentamt**
**European Patent Office**
**Office européen des brevets**

(11) **EP 4 745 559 A1**

(12) **EUROPEAN PATENT APPLICATION**
published in accordance with Art. 153(4) EPC

(43) Date of publication:
**20.05.2026 Bulletin 2026/21**

(21) Application number: **24845185.8**

(22) Date of filing: **28.05.2024**

(51) International Patent Classification (IPC):
**G01N 21/3563** *(2014.01)*      **B07C 5/342** *(2006.01)*
**G01J 3/42** *(2006.01)*         **G01N 21/85** *(2006.01)*
**B65G 15/58** *(2006.01)*

(52) Cooperative Patent Classification (CPC):
**B07C 5/342; G01J 3/42; G01N 21/3563;**
**G01N 21/85;** B65G 15/58

(86) International application number:
**PCT/JP2024/019555**

(87) International publication number:
**WO 2025/022803 (30.01.2025 Gazette 2025/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.07.2023 JP 2023120815**

(71) Applicant: **Daiichi Jitsugyo Viswill Co., Ltd.**
**Suita-shi Osaka 564-0054 (JP)**

(72) Inventors:
• **NISHIYAMA, Katsuhiko**
  **Suita-shi, Osaka 564-0054 (JP)**
• **YOKOYAMA, Takuma**
  **Tokyo 100-8150 (JP)**
• **NAGASHIMA, Toshikazu**
  **Tokyo 100-8150 (JP)**

(74) Representative: **Isarpatent**
**Patent- und Rechtsanwälte Part G mbB**
**Friedrichstrasse 31**
**80801 München (DE)**

(54) **OPTICAL MEASUREMENT DEVICE**

(57)   An optical measurement device (1) includes: a light source device (35) configured to emit wavelength-swept light; a conveyance device (10) configured to convey measurement objects M; an illumination device (40) having an optical path switching unit (42) configured to guide the wavelength-swept light from the light source device (35) to a measurement position P on a conveyance path of the conveyance device (10), and switch its optical path; a measurement light receiving device (51) configured to receive the wavelength-swept light directed to the measurement position P; an object detection sensor (55) configured to detect a measurement object M conveyed; a conveyance detection sensor configured to detect a change in the conveying speed or a displacement in the conveying direction of the measurement object M; and a control device (65). The control device (65) determines a timing at which the measurement object M reaches the measurement position P based on detection by the object detection sensor (55) and on a change in the conveying speed or a displacement in the conveying direction detected by the conveyance detection sensor, and controls the optical path switching unit (42) at this timing so that the optical path is set such that the wavelength-swept light is received by the light receiving device while the measurement object M is present at the measurement position P.

*FIG. 1*

# Description

[TECHNICAL FIELD]

The present invention relates to an optical measurement device.

[BACKGROUND ART]

As one of the measurement methods utilizing optical properties, spectroscopy using a wavelength-swept-type spectroscope has conventionally been known. This spectroscope generates wavelength-swept light whose wavelength changes over time, and irradiates a measurement object with the generated wavelength-swept light. The wavelength-swept light is a pulse or a pulse train in which time and wavelength have a one-to-one correspondence. The time waveform of the light obtained by irradiating the inspection target with this wavelength-swept light is detected by a photodetector, and the signal waveform output from the photodetector represents a spectrum whose time axis corresponds to wavelength.

Analysis of spectroscopy is classified into a transmission type, in which transmitted light through an object is regarded as object light, and a reflection type, in which reflected light is regarded as object light. The reflection type is suitable for measurement of objects having high reflectance, but the optical information obtained is limited to that near the surface of the object. Therefore, this type cannot be regarded as having sufficient accuracy in measurements of objects such as precision industrial products, samples collected from animals and plants, substances ingested into the human body, and liquids or gases produced in production plants.

On the other hand, the transmission type is suitable for measurements of foods and beverages (hereinafter collectively referred to as foods and beverages) because it is possible to obtain optical properties including not only the surface of the object but also its deeper portions. Patent Document 1 below discloses a transmission type product inspection device. The product inspection device includes an illumination optical system that irradiates the surface of a product (inspection target) with pulsed light, and a photodetector provided on the rear-surface side of the product to receive light that has transmitted through the product.

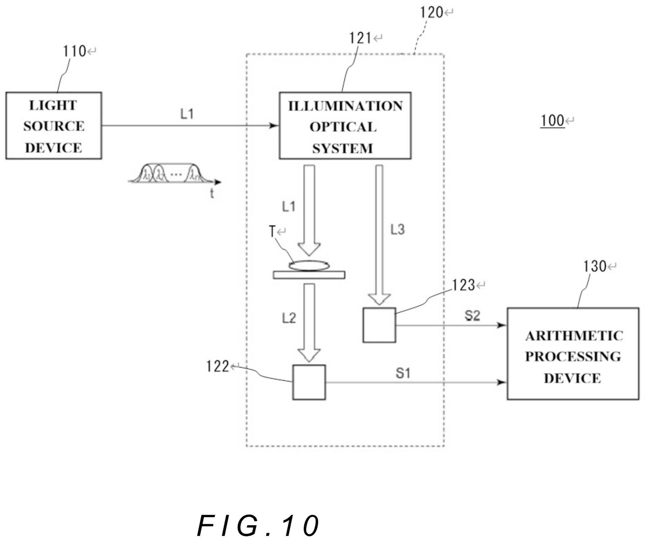

FIG. 10 shows a wavelength-swept-type spectroscopic device 100 as an example. The spectroscopic device 100 includes a light source device 110, a spectroscopic head 120, and an arithmetic processing device 130.

The light source device 110 generates wavelength-swept light L1, and the wavelength-swept light L1 generated is led to the spectroscopic head 120. The illumination optical system 121 of the spectroscopic head 120 irradiates a sample T with the wavelength-swept light L1, and transmitted light (object light) L2 through the sample T is received (detected) by a first photodetector 122. Further, in the illumination optical system 121, part of the wavelength-swept light L1 is branched off as reference light L3, and the reference light L3 thus branched off is received (detected) by a second photodetector 123.

A first detection signal S1 output from the first photodetector 122 and a second detection signal S2 output from the second photodetector 123 are transmitted to the arithmetic processing device 130. The object light L2 and the reference light L3 each inherit the one-to-one correspondence between time and wavelength of the wavelength-swept light L1. Therefore, the time waveform of the first detection signal S1 can be converted into the spectrum of the object light L2 by converting its time axis into wavelength. Similarly, the time waveform of the second detection signal S2 can be converted into the spectrum of the reference light L3 by converting its time axis into wavelength. The arithmetic processing device 130 measures (calculates) the spectroscopic characteristics (reflectance) of the sample T by calculating, for each wavelength, the ratio of the object light L2 to the reference light L3.

[PRIOR ART DOCUMENTS]

[PATENT DOCUMENTS]

[Patent Document 1] Japanese Unexamined Patent Publication No. 2020-159973

[SUMMARY OF THE INVENTION]

[PROBLEM TO BE SOLVED]

In the above-described conventional transmission type spectroscopic device, the photodetector is designed and selected on the assumption that the incident power is low when a measurement target product (hereinafter also referred to as the product) has characteristics of low light transmittance and high light diffusibility. On the other hand, a pulsed laser having high peak power is used as the light source device to increase the power of the transmitted light.

Further, in the case of inspecting industrially mass-produced products, the products are conveyed at high speed by a conveyance device. Therefore, when a product becomes unstable during conveyance, the product may fall off the conveyance device or become misaligned, resulting in a situation in which the product is not present at the measurement position where it is supposed to be. In such a situation, the wavelength-swept light L1, which is a pulsed laser beam emitted toward the measurement position, enters the photodetector without passing through the product.

Further, depending on how the products are conveyed, an interval may occur between products that are successively conveyed. In such a case, the laser beam may directly enter the photodetector through that interval.

As described above, when a photodetector is designed or selected on the assumption that the incident light power is low, if a laser beam having high peak power directly enters the photodetector and the power of the laser beam exceeds the allowable power of the photodetector, the reliability of the photodetector may be compromised (degraded) due to the power of the incident laser beam.

In particular, an element having an amplifying mechanism therein, such as an avalanche photodiode, is known to have a low damage threshold. For example, the damage threshold of the InGaAs avalanche photodetector APD430C (manufactured by THORLABS, U.S.) is 1 mW, and the power of the laser beam used in this spectroscopy configuration is sufficiently higher than this. Therefore, when the laser beam directly enters, the element will be damaged.

The present invention has been made in view of the above circumstances, and an object of the present invention is to provide an optical measurement device capable of suppressing a laser beam from being directly incident on a photodetector at the time of measurement.

[SOLUTION TO PROBLEM]

The present invention to solve the above problem is an optical measurement device, including:

a light source device configured to generate wavelength-swept light;
a conveyance device having two endless annular conveying belts that are arranged to face each other and form a linear conveyance path, and a driving unit configured to rotate the conveying belts, the conveyance device being configured to convey, along the conveyance path, measurement objects in a state of being placed on and between the two conveying belts;
an illumination device establishing an optical path that guides the wavelength-swept light generated by the light source device to a measurement position set on the conveyance path and irradiates the measurement position with the wavelength-swept light, and having an optical path switching unit that is provided on the optical path and configured to switch the optical path of the wavelength-swept light;
a light receiving device configured to receive the wavelength-swept light directed to the measurement position by the illumination device;
an object detection sensor provided upstream of the measurement position in a conveying direction of the conveyance device, and configured to detect a measurement object conveyed by the conveyance device;
a conveyance detection sensor configured to detect a change in the conveying speed of the conveying belts or a displacement in the conveying direction;

and
a control device configured to control a driving unit of the conveyance device and the optical path switching unit of the illumination device,
wherein the control device determines a timing at which the measurement object reaches the measurement position, based on detection by the object detection sensor and on a change in the conveying speed or a displacement in the conveying direction detected by the conveyance detection sensor, controls the optical path switching unit in sync with the determined timing so that the optical path is set such that the wavelength-swept light is received by the light receiving device while the measurement object is present at the measurement position, however, the optical path is set such that the wavelength-swept light is not received by the light receiving device only while the measurement object is not present at the measurement position.

According to the optical measurement device of this aspect (first aspect), the measurement objects are conveyed along the conveyance path while being placed on and between the two conveying belts of the conveyance device. Meanwhile, the wavelength-swept light is generated by the light source device, and the wavelength-swept light generated is guided to the measurement position set on the conveyance path by the illumination device. This wavelength-swept light directed to the measurement position is received by the light receiving device.

The measurement object conveyed by the conveyance device is detected by the object detection sensor provided upstream of the measurement position. Based on the detection of the measurement object by the object detection sensor and the change in the conveying speed or displacement in the conveying direction of the conveying belt detected by the conveyance detection sensor, the control device determines the timing at which the measurement object reaches the measurement position. In sync with the determined timing, the optical path switching unit of the illumination device is controlled so that while the measurement object is present at the measurement position, the optical path is set such that the wavelength-swept light is received by the light receiving device, however, while the measurement object is not present at the measurement position, the optical path is switched so that the optical path is set such that the wavelength-swept light is not received by the light receiving device. While the measurement object is present at the measurement position, the wavelength-swept light is transmitted through the measurement object and received by the light receiving device, and the light receiving device outputs a detection signal corresponding to the optical property of the measurement object.

Thus, according to this optical measurement device, the optical path switching unit switches the optical path of the wavelength-swept light to a path that is not received by the light receiving device while the measurement object is not present at the measurement position, thereby keeping the wavelength-swept light from being directly received by the light receiving device. This makes it possible to avoid the light receiving device being damaged due to the wavelength-swept light being directly received by the light receiving device.

In the above first aspect, the optical path switching unit may adopt a configuration that includes any of a galvanometer mirror, a Micro Electro Mechanical Systems (MEMS) mirror, a piezo-driven mirror, or a polygon mirror.

Further, in the first aspect, the illumination device may adopt a configuration that includes an aperture on an emission side of the optical path switching unit.

Further, the present invention is directed to an optical measurement device, including:

a light source device configured to generate wavelength-swept light;
a conveyance device having two endless annular conveying belts that are arranged to face each other and form a linear conveyance path, and a driving unit configured to rotate the conveying belts, the conveyance device being configured to convey, along the conveyance path, measurement objects in a state of being placed on and between the two conveying belts;
an illumination device establishing an optical path that guides the wavelength-swept light generated by the light source device to a measurement position set on the conveyance path and irradiates the measurement position with the wavelength-swept light, and having a light shielding unit that is provided on the optical path and configured to switch between transmission and non-transmission of the wavelength-swept light;
a light receiving device configured to receive the wavelength-swept light directed to the measurement position by the illumination device;
an object detection sensor provided upstream of the measurement position in a conveying direction of the conveyance device, and configured to detect a measurement object conveyed by the conveyance device;
a conveyance detection sensor configured to detect a change in the conveying speed of the conveying belts or a displacement in the conveying direction; and
a control device configured to control a driving unit of the conveyance device and the light shielding unit of the illumination device,
wherein the control device determines a timing at which the measurement object reaches the measurement position, based on detection by the object detection sensor and on a change in the conveying speed or a displacement in the conveying direction detected by the conveyance detection sensor, controls the light shielding unit in sync with the determined timing so that the light shielding unit is in a transmitting state while the measurement object is present at the measurement position, however, the light shielding unit is in a non-transmitting state while the measurement object is not present at the measurement position.

According to the optical measurement device of this aspect (second aspect), the measurement objects are conveyed along the conveyance path while being placed on and between the two conveying belts of the conveyance device. Meanwhile, the wavelength-swept light is generated by the light source device, and the wavelength-swept light generated is guided to the measurement position set on the conveyance path by the illumination device. This wavelength-swept light directed to the measurement position is received by the light receiving device.

The measurement object conveyed by the conveyance device is detected by the object detection sensor provided upstream of the measurement position. Based on the detection of the measurement object by the object detection sensor and the change in the conveying speed or displacement in the conveying direction of the conveying belt detected by the conveyance detection sensor, the control device determines the timing at which the measurement object reaches the measurement position. In sync with the determined timing, the light shielding unit of the illumination device is controlled so that while the measurement object is present at the measurement position, the wavelength-swept light is transmitted, however, while the measurement object is not present at the measurement position, the wavelength-swept light is shielded. Only while the measurement object is present at the measurement position, the wavelength-swept light is transmitted through the measurement object and received by the light receiving device, and the light receiving device outputs a detection signal corresponding to the optical property of the measurement object. Note that the non-transmitting state includes not only a case in which the transmission of light is completely blocked, but also a case in which the amount of transmitted light is reduced.

Thus, according to this optical measurement device, the light shielding unit blocks the optical path of the wavelength-swept light while the measurement object is not present at the measurement position, thereby keeping the wavelength-swept light from being directly received by the light receiving device. This makes it possible to avoid the light receiving device being damaged due to the wavelength-swept light being directly received by the light receiving device.

In the second aspect, the light shielding unit may adopt a configuration that includes either a movable shutter or a variable attenuator, and the variable attenuator may adopt a configuration that includes either a liquid crystal shutter, an acousto-optic modulator, or an electro-optic modulator.

Further, each of the above aspects may be adapted so that the wavelength-swept light passes between the two conveying belts and is directed to the measurement object.

[ADVANTAGEOUS EFFECT OF THE INVENTION]

According to the optical measurement device of the present invention, the optical path can be controlled so that the wavelength-swept light is not received by the light receiving device while the measurement object is not present at the measurement position, thereby keeping the wavelength-swept light from being directly received by the light receiving device and avoiding damage to the light receiving device due to the wavelength-swept light being directly received by the light receiving device.

[BRIEF DESCRIPTION OF THE DRAWINGS]

[FIG. 1] FIG. 1 is a front view illustrating a schematic configuration of an optical measurement device according to one embodiment of the present invention.
[FIG. 2] FIG. 2 is a plan view illustrating a conveyance device and the like according to the present embodiment.
[FIG. 3] Fig. 3 is a cross-sectional view taken in the direction of arrow A-A in FIG. 2.
[FIG. 4] Fig. 4 is a cross-sectional view taken in the direction of arrow C-C in FIG. 3.
[FIG. 5] Fig. 5 is a cross-sectional view taken in the direction of arrow B-B in FIG. 2.
[FIG. 6] FIG. 6 is an explanatory diagram illustrating a schematic configuration of the optical measurement device according to the present embodiment, and illustrates the optical path between a light source device and an illumination device.
[FIG. 7] FIG. 7 is an explanatory diagram illustrating wavelength-swept light.
[FIG. 8] FIG. 8 is an explanatory diagram illustrating spectroscopy by the optical measurement device of the present embodiment.
[FIG. 9] FIG. 9 is an explanatory diagram illustrating a schematic configuration of an optical measurement device according to another embodiment of the present invention.
[FIG. 10] FIG. 10 is a block diagram illustrating a conventional optical measurement device.

[DESCRIPTION OF EMBODIMENTS]

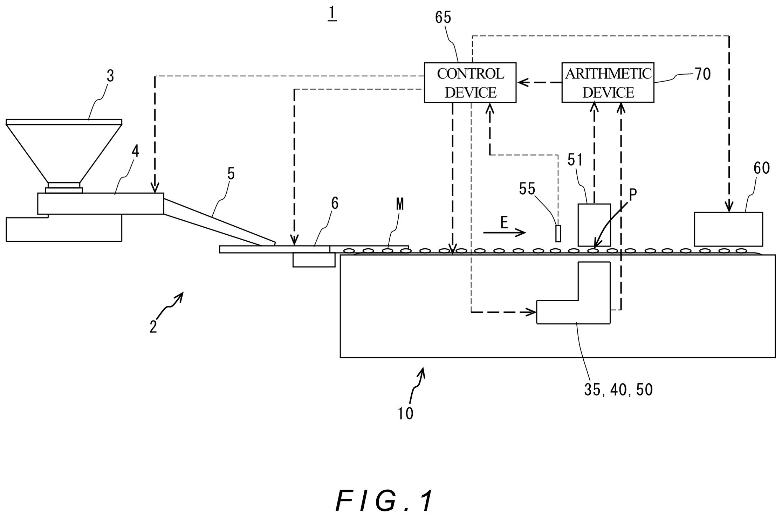

Particular embodiments of the present invention will be described below with reference to the drawings.
As illustrated in FIG. 1 to FIG. 6, an optical measurement device 1 of the present example includes a supply unit 2, a conveyance device 10, a light source device 35, an illumination device 40, a reference light receiving device 50, a measurement light receiving device 51, an object detection sensor 55, a sorting device 60, a control device 65, and an arithmetic device 70. Each of these parts will be detailed hereinbelow. Note that, in the present example, the measurement object M is a tablet having a circular planar shape and an elliptical longitudinal cross-sectional shape; however, examples of the measurement object M may include pharmaceutical products having other shapes (such as tablets, capsules, and the like), foods, mechanical parts, electronic components, and the like. However, the measurement object M is not limited to these.

The supply unit 2 is a mechanism that aligns the measurement objects M in a single line and supplies them to the conveyance device 10, and includes a hopper 3, a vibration feeder 4, a chute 5, an alignment table 6, and the like. The hopper 3 stores a large number of the measurement objects M supplied through its upper end opening and dispenses an appropriate quantity of the measurement objects M from its lower end opening. The vibration feeder 4 is provided below the hopper 3, receives the measurement objects M dispensed from the lower end opening of the hopper 3, and moves the measurement objects M along a set pathway by applying vibration.

The chute 5 is provided so as to connect to a conveyance end of the vibration feeder 4, receives the measurement objects M from the conveyance end, causes the measurement objects M to slide obliquely downward, and dispenses them from its lower end. The alignment table 6 has a disc-shaped rotary table provided horizontally below the lower end of the chute 5, receives the measurement objects M supplied from the chute 5 on to the rotary table, aligns the measurement objects M in a single line by the rotational action of the rotary table, and supplies them to the conveyance device 10.

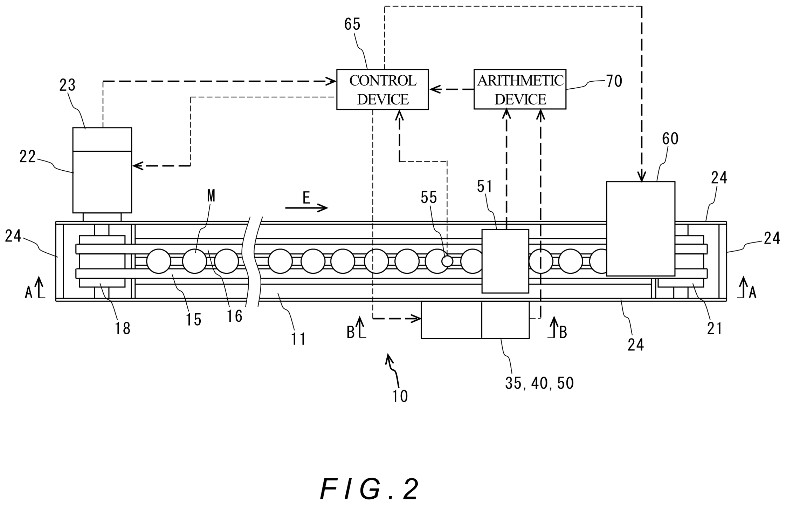

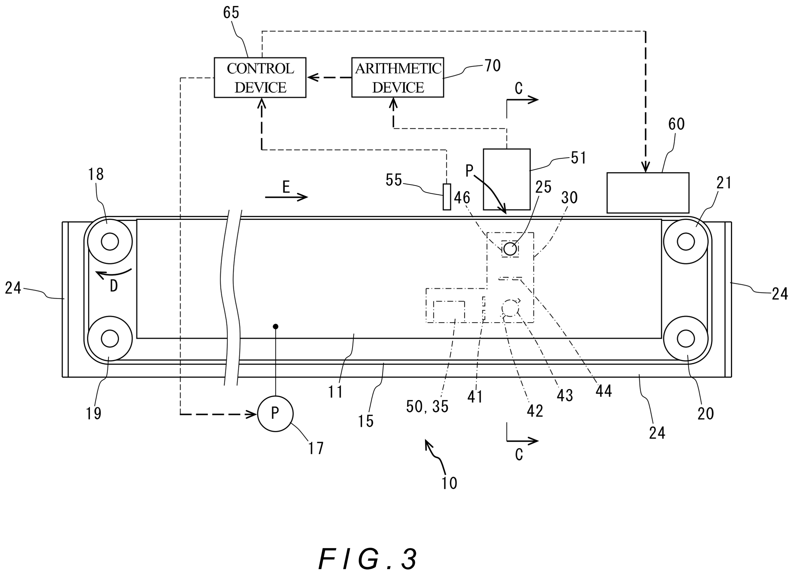

As illustrated in FIG. 2 and FIG. 3, the conveyance device 10 includes a suction box 11 having an elongated housing-like shape, two endless annular conveying belts 15 and 16 arranged side-by-side with a predetermined interval therebetween so as to face each other, an exhaust pump 17 that creates a negative pressure inside the suction box 11, and a cover body 24 provided so as to surround the suction box 11.

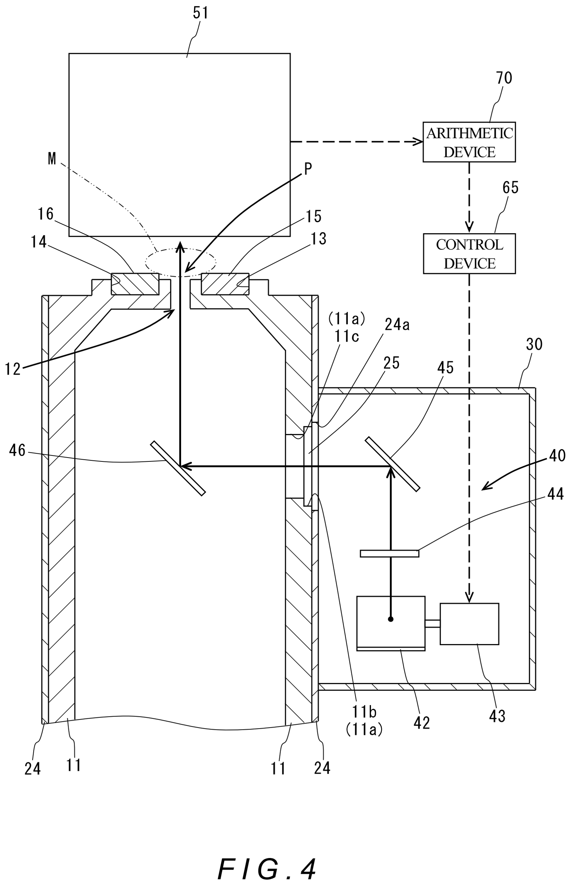

As illustrated in FIG. 4, the suction box 11 has a slit 12 that opens on its upper surface and is formed along its longitudinal direction, and further has guide grooves 13 and 14 formed on both sides of the slit 12.

As illustrated in FIG. 3, in the cover body 24, a drive pulley 18 and driven pulleys 19, 20, and 21 are arranged at its four corners so as to surround the suction box 11. The conveying belts 15 and 16 are fitted in the guide grooves 13 and 14 formed on the upper surface of the suction box 11, and are wound around the drive pulley 18 and the driven pulleys 19, 20, and 21. Further, the drive pulley 18 is coupled with a drive motor 22, and the drive pulley 18 is driven by this drive motor 22. When the drive pulley 18 rotates in the arrow D direction, the conveying belts 15 and 16 rotate in the arrow E direction. Further, the drive motor 22 is equipped with a rotary encoder 23. This rotary encoder 23 detects the rotation speed of the drive motor 22, and from the rotation speed of the drive motor 22, the traveling speeds (conveying speeds) of the conveying belts 15 and 16 can be calculated.

The rotary encoder 23 detects the rotation angle of the drive motor 22 per unit time. In this regard, the rotary encoder 23 can detect the traveling speeds (conveying speeds) of the conveying belts 15 and 16, and since the traveling speed is equivalent to the traveling amounts (displacement amounts) of the conveying belts 15 and 16, the rotary encoder 23 can therefore be regarded as a means for detecting the displacement amounts of the conveying belts 15 and 16. Further, the rotary encoder 23 serves as a conveyance detection sensor that detects the conveying speed or the displacement of the conveying belts in the conveying direction. Such a conveyance detection sensor is not limited to the rotary encoder 23.

Note that the conveying belts 15 and 16 are constituted by timing belts, and the drive pulley 18 and the driven pulleys 19, 20, and 21 are constituted by timing pulleys; however, such configurations are not limited to these.

In this conveyance device 10, the exhaust pump 17 evacuates the inside of the suction box 11 to create a negative pressure in the suction box 11. This negative pressure acts between the conveying belts 15 and 16 through the slit 12. Then, when measurement objects M are fed from the upstream of the conveyance device 10 in such a manner as to be placed on and between the conveying belts 15 and 16, the measurement objects M are adsorbed onto the conveying belts 15 and 16 by the action of the negative pressure. The tablets adsorbed on to the conveying belts 15 and 16 are conveyed towards the conveyance end by the traveling of the conveying belts 15 and 16 in the arrow E direction. In this way, in the conveyance device 10, the upper surfaces of the conveying belts 15 and 16 serve as a conveyance support surface, and their traveling paths serve as an adsorption conveyance path.

A housing-shaped cover body 30 is provided on one side of the conveyance device 10 (on the front side in this example), and in this cover body 30, the light source device 35, a main part of the illumination device 40, and the reference light receiving device 50 are provided.

Further, a measurement position P is set at an appropriate location in the adsorption conveyance path formed by the conveying belts 15 and 16, and the measurement light receiving device 51 is provided above this measurement position P. Further, in the adsorption conveyance path, the object detection sensor 55 is provided above an appropriate location set upstream of the measurement position P, and the sorting device 60 is provided above a vicinity of the conveyance end on the downstream side of the measurement position P.

The light source device 35 includes a pulsed light source that emits pulsed light, and a stretcher that stretches the pulsed light emitted from the pulsed light source and emits the stretched pulsed light. Specifically, the pulsed light source emits broadband pulsed light having a broadband continuous spectrum. The spectrum of the broadband pulsed light is continuous over a wavelength range of at least 10 nm, preferably 50 nm, and more preferably 100 nm, for example in the range of 900 nm to 1300 nm, and the width of the wavelength range of the broadband pulsed light only needs to cover the wavelength range required for spectroscopy. Further, the stretcher generates and emits wavelength-swept light obtained by stretching, on the time axis, the broadband pulsed light emitted from the pulsed light source.

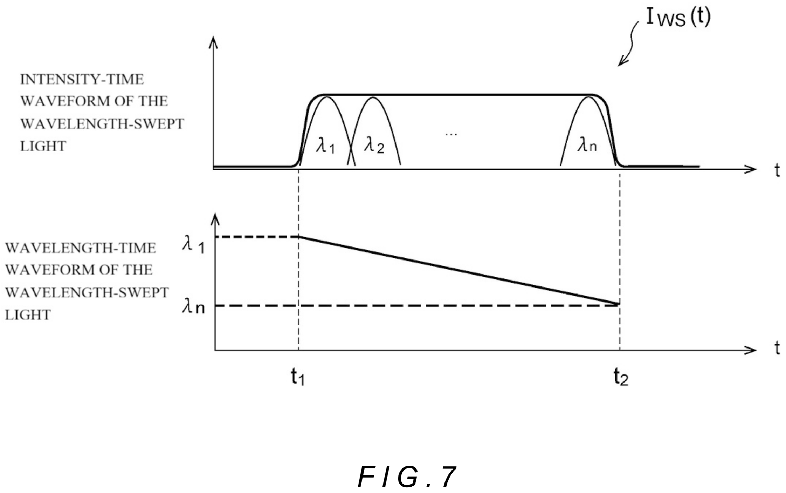

FIG. 7 is a diagram illustrating the wavelength-swept light. The upper part of the figure shows the intensity (time waveform) IWS(t) of the wavelength-swept light, and the lower part of the figure shows the temporal change of the wavelength $\lambda$ of the wavelength-swept light. In this example, the wavelength-swept light is a single pulsed light, the main wavelength at its leading edge is $\lambda 1$, the main wavelength at its trailing edge is $\lambda n$, and the wavelength changes over time from $\lambda 1$ to $\lambda n$ within a single pulse. Further, while the wavelength-swept light in this example is a positive chirp pulse ($\lambda 1 > \lambda n$) in which the frequency increases over time, in other words, the wavelength becomes shorter over time, the wavelength-swept light is not limited to this and may be a negative chirp pulse ($\lambda 1 < \lambda n$) in which the wavelength becomes longer over time. Alternatively, the wavelength-swept light may be a pulse train composed of temporally isolated pulses (wave packets) for each wavelength.

The illumination device 40 is a mechanism that guides the wavelength-swept light emitted from the light source device 35 and irradiates the measurement position P set on the conveyance path of the conveyance device 10. In this example, the illumination device 40 is constituted by a beam splitter 41 provided inside the cover body 30, a galvanometer mirror 42, a motor 43, a slit member 44, a first mirror 45, and a second mirror 46 provided inside the suction box 11 of the conveyance device 10, and may also include other mirrors or lenses.

The beam splitter 41 is provided on the optical path of the wavelength-swept light emitted from the light source device 35 and is an optical member that branches the wavelength-swept light into two optical beams. One of the optical beams is transmitted in the emission direction to become measurement light, and the other optical beam is reflected at, for example, 45° to become reference light. The reference light enters the reference light receiving device 50, which is located on a side of the light source device 35.

The galvanometer mirror 42 is provided on the optical path of the measurement light that has passed through the beam splitter 41 and reflects the measurement light toward the first mirror 45 arranged above the galvanometer mirror 42. This galvanometer mirror 42 is configured to rotate, by the motor 43, about an axis that intersects the optical axis of the measurement light horizontally and perpendicularly, and the reflection angle of the measurement light is adjusted by this rotation. The galvanometer mirror 42 and motor 43 constitute an optical path switching unit. In this example, the galvanometer mirror 42 is used as the optical path switching unit, but the optical path switching unit is not limited to this. MEMS (Micro Electro Mechanical Systems) mirrors, polygon mirrors, piezo driven mirrors, and the like can be used instead of the galvanometer mirror 42.

The slit member 44 is a light-shielding member having a slit as an opening, and is provided between the galvanometer mirror 42 and the first mirror 45. When the measurement light reflected by the galvanometer mirror 42 takes an optical path (illumination optical path) that passes through the slit, the measurement light reaches the first mirror 45, and when the measurement light takes an optical path (deflected optical path) that does not pass through the slit, the measurement light is blocked by the slit member 44. Note that the slit member 44 serves as an aperture; however, a member having a structure with a similar function, such as an iris, a pinhole, or a knife edge (a single-edged slit), may be used instead of this.

The first mirror 45 is arranged so as to reflect the measurement light reflected by the galvanometer mirror 42 towards the second mirror 46 provided inside the suction box 11 of the conveyance device 10. Through holes 24a and 11a are formed respectively in the cover body 24 of the conveyance device 10 and in a side plate of the suction box 11, through which an optical path of the measurement light toward the second mirror 46 passes. Further, the through hole 11a provided in the suction box 11 is a two-stage hole whose outer side is a large-diameter portion 11b and whose inner side is a small-diameter portion 11c. By fitting a glass plate 25 into the large-diameter portion 11b, the through hole 11a is airtightly sealed. Thus, the measurement light reflected by the first mirror 45 reaches the second mirror 46 inside the suction box 11 through the through hole 24a and the glass plate 25 provided to the through hole 11a.

As described above, the second mirror 46 is provided inside the suction box 11 of the conveyance device 10, and reflects upward the measurement light reflected by the first mirror 45 so that the measurement light passes the slit 12 provided in the suction box 11 of the conveyance device 10 and the conveying belts 15 and 16, and then passes through the measurement position P set on the conveyance path.

Note that the illumination device 40 of the present example may be further provided with a collimator that collimates the wavelength-swept light emitted from the light source device 35, between the light source device 35 and the beam splitter 41.

The reference light receiving device 50 detects reference light split by the beam splitter 41, and outputs A/D-converted digital signals as reference signals.

The measurement light receiving device 51 is arranged above the measurement position P, detects the measurement light (object light) that has passed through the measurement object M located at the measurement position P, and outputs A/D-converted digital signals as measurement signals.

As described above, the object detection sensor 55 is provided at an appropriate position set on the upstream of the measurement position P, detects the measurement object M conveyed by the conveyance device 10, and outputs a detection signal to the control device 65. Note that the object detection sensor 55 may be, for example, an optical sensor; however, the object detection sensor 55 is not limited to this, and all conventionally known object detection sensors can be used within the applicable range.

As described above, the sorting device 60, which is provided at the conveyance end of the conveyance device 10, includes a not-shown sorting and collecting mechanism, a good product collection chamber, and a defective product collection chamber. The sorting device 60 drives the sorting and collecting mechanism according to a command from the control device 65 to collect the good products and collect defective products into the defective product collection chamber, out of the measurement objects M conveyed to the conveyance end of the conveyance device 10 into the good product collection chamber. Note that the sorting and collecting mechanism may be a mechanism configured to collect the measurement objects M by suction caused by a negative pressure.

The control device 65 controls operations of the vibration feeder 4, the alignment table 6, the exhaust pump 17 and the drive motor 22 of the conveyance device 10, the light source device 35, the motor 43 of the illumination device 40, the sorting and collecting mechanism of the sorting device 60, and the like. In particular, the control device 65, upon detection of a measurement object M by the object detection sensor 55, drives the motor 43 of the illumination device 40 and performs processing of switching the optical path of the measurement light reflected by the galvanometer mirror 42.

Specifically, when a measurement object M is detected by the object detection sensor 55 and a detection signal is received from the object detection sensor 55, the control device 65 calculates the conveying speed of the measurement object M conveyed by the conveying belts 15 and 16 based on the rotation speed of the drive motor 22 which is detected by the rotary encoder 23 at that time.

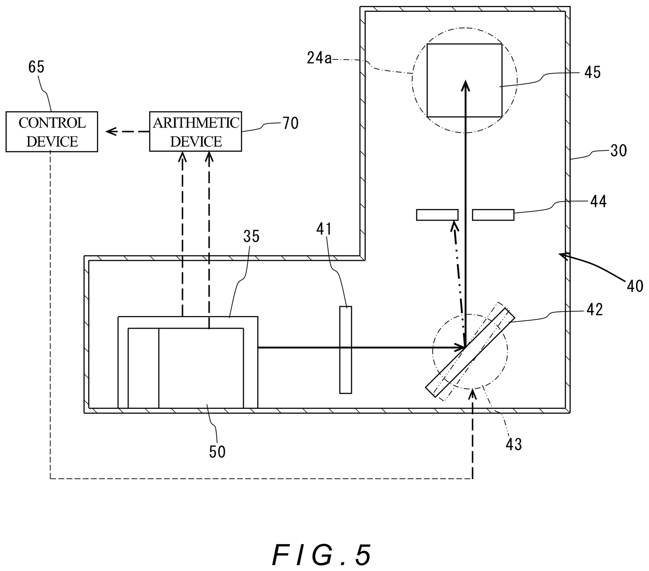

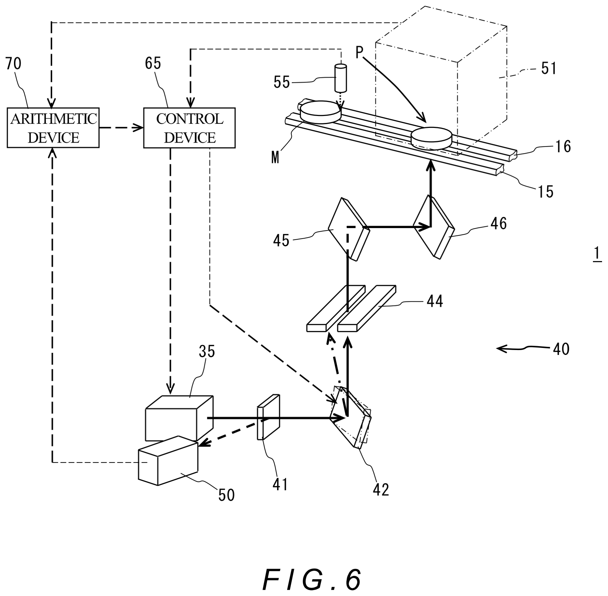

Next, the control device 65: calculates the time (timing) taken for the measurement object M detected by the object detection sensor 55 to reach the measurement position P from the detection time point, based on the calculated conveying speed and the distance between the detection position of the object detection sensor 55 and the measurement position P, which has been obtained in advance; upon elapse of the calculated time, drives the motor 43 until the measurement object M passes the measurement position P to switch the optical path of the measurement light reflected by the galvanometer mirror 42 to an optical path (illumination optical path: the optical path indicated by solid lines in FIG. 5 and FIG. 6) that passes through the slit hole of the slit member 44; and then just before the measurement object M passes the measurement position P, drives the motor 43 again to switch the optical path of the measurement light reflected by the galvanometer mirror 42 to an optical path (deflected optical path: the optical path indicated by the two-dot chain line in FIG. 5 and FIG. 6) that does not pass through the slit hole of the slit member 44. As a result, the measurement light is emitted to the measurement position P only when the measurement object M is present at the measurement position P. In other words, it is possible to keep the measurement light from being emitted to the measurement position P while the measurement object M is not present at the measurement position P.

Note that the time during which the conveyed measurement object M is present at the measurement position P can be calculated based on the size of the measurement object M in the conveying direction (the diameter in the present example) and the conveying speed of the measurement object M.

The arithmetic device 70 receives output signals from the measurement light receiving device 51 that detects object light and output signals from the reference light receiving device 50, and processes these signals to detect (measure) the optical property of the measurement object M.

In wavelength-swept-type spectroscopy, the wavelength-swept light has a one-to-one correspondence between time and wavelength. This correspondence is likewise maintained in the reference light and is inherited by the object light. Using this correspondence relationship between time and wavelength, the arithmetic device 70 detects (measures) the optical properties of the measurement object M.

Where: the output signal of the measurement light receiving device 51 is D1; the time waveform of the object light indicated by the output signal D1 is IOBJ(t); the output signal of the reference light receiving device 50 is D2; and the time waveform of the reference light indicated by the output signal D2 is IREF(t), the arithmetic device 70, for example, converts the time waveform IOBJ(t) of the object light into a spectrum IOBJ($\lambda$) in the frequency domain, and similarly converts the time waveform IREF(t) of the reference light into a spectrum, and calculates the reference spectrum IREF($\lambda$) by appropriately scaling the converted spectrum.

The processing in the arithmetic device 70 is not particularly limited. For example, the arithmetic device 70 calculates the transmittance T($\lambda$) as an optical property of the measurement object M based on the reference spectrum IREF($\lambda$) and the spectrum IOBJ($\lambda$) of the object light, using the following equation, and determines whether the measurement object M is acceptable.

$$T(\lambda) \;=\; IOBJ(\lambda) \,/\, IREF(\lambda)$$

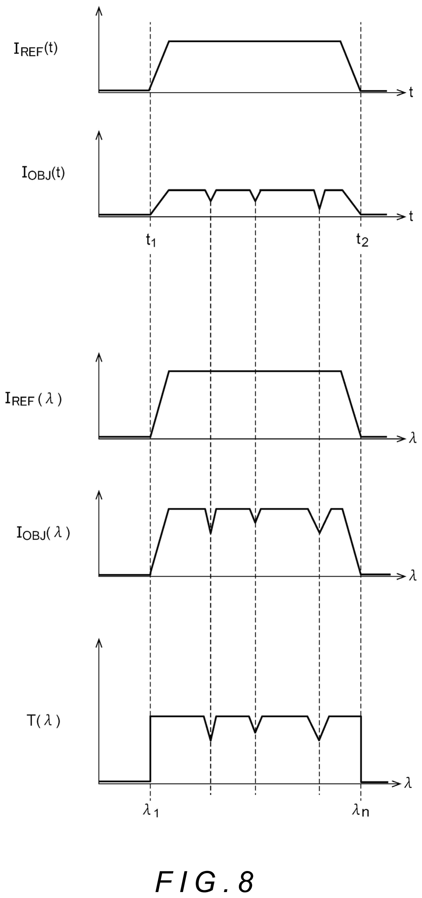

FIG. 8 is an explanatory diagram illustrating spectroscopy by the optical measurement device 1 of the present example. As described above, since the wavelength-swept light has a one-to-one correspondence between time t and wavelength $\lambda$, the time waveform IREF(t) can be converted into the spectrum IREF($\lambda$) in the frequency domain.

Since the time waveform IOBJ(t) of the object light also has a one-to-one correspondence between time t and wavelength $\lambda$, the waveform IOBJ(t) of the object light can be converted into the spectrum IOBJ($\lambda$) of the object light.

The arithmetic device 70 calculates the transmittance spectrum T($\lambda$) of the measurement object M based on the ratio IOBJ($\lambda$)/IREF($\lambda$) of the two spectra IOBJ($\lambda$) and IREF($\lambda$). Note that the optical property of the measurement object M is represented by this transmittance spectrum T($\lambda$).

Assuming that the relationship between the wavelength $\lambda$ and the time t in the wavelength-swept light is expressed as a function $\lambda = f(t)$, the simplest case is that the wavelength $\lambda$ changes linearly with respect to time t according to a linear function. This means that when the time waveform IOBJ(t) of the object light decreases at a certain time tx, the transmittance spectrum T($\lambda$) indicates an absorption spectrum at the wavelength $\lambda x = f(tx)$.

Note that the processing in the arithmetic device 70 is not limited to the above. The transmittance spectrum T($\lambda$) may also be calculated by first calculating the ratio T(t) = IOBJ(t)/IREF(t) between the two time waveforms IOBJ(t) and IREF(t), and then converting the variable t of the time waveform T(t) into $\lambda$.

Note that the control device 65 and the arithmetic device 70 are configured by a computer including a CPU, a RAM, a ROM, and the like, which may be configured by separate computers or a single computer.

The optical measurement device 1 of the present example, having the above-described configuration, measures the optical property of the measurement object M as follows.

First, under the control of the control device 65, the vibration feeder 4 and the alignment table 6, as well as the exhaust pump 17 and the drive motor 22 of the conveyance device 10, are driven. The measurement objects M loaded into the hopper 3 are aligned in a single line as they pass sequentially through the vibration feeder 4 and the alignment table 6, and are supplied to the conveyance device 10 in this aligned state. Then, the measurement objects M successively supplied to the conveyance device 10 are conveyed while being adsorbed in a state of being placed on and between the conveying belts 15 and 16. Therefore, the measurement objects M are conveyed in a stable posture and remain on the adsorption conveyance path without departing from the adsorption conveyance path.

Further, the control device 65 drives the light source device 35 to emit wavelength-swept light. The wavelength-swept light emitted from the light source device 35 is split into two optical beams by the beam splitter 41. One of the optical beams is transmitted in the emission direction to become measurement light, while the other optical beam is reflected and received as reference light by the reference light receiving device 50. At this time, the galvanometer mirror 42 is in a posture such that the reflected measurement light takes an optical path (deflected optical path: the optical path indicated by the two-dot chain line in FIG. 5 and FIG. 6) that does not pass through the slit hole of the slit member 44 (the posture indicated by the two-dot chain line in FIG. 5 and FIG. 6). Therefore, at this point, the measurement light does not enter the measurement light receiving device 51.

Then, when the measurement objects M successively conveyed by the conveyance device 10 are detected by the object detection sensor 55 and the detection signal is received from the object detection sensor 55, the control device 65 calculates the time (timing) required for each measurement object M detected by the object detection sensor 55 to reach the measurement position P from the detection time point, based on the rotation speed of the drive motor 22 detected by the rotary encoder 23. Upon elapse of the calculated time, the control device 65 drives the motor 43 to switch the optical path of the measurement light reflected by the galvanometer mirror 42 to an optical path (illumination optical path) that passes through the slit hole of the slit member 44.

In this way, the measurement light is sequentially reflected by the first mirror 45 and the second mirror 46, and enters the measurement object M located at the measurement position P. After entering the measurement object M, the measurement light passes through the measurement object M, and is then received by the measurement light receiving device 51 as object light. Next, the control device 65 maintains the optical path of the measurement light in the illumination optical path until the measurement object M is to pass the measurement position P, and the control device 65, just before the measurement object M is to pass the measurement position P, drives the motor 43 again to switch the optical path of the measurement light reflected by the galvanometer mirror 42 to an optical path (shielded optical path) that does not pass through the slit hole of the slit member 44. As a result, the measurement light is emitted to the measurement position P only when the measurement object M is present at the measurement position P, and the measurement light can be kept from being emitted to the measurement position P while the measurement object M is not present at the measurement position P.

Further, since the measurement object M is conveyed to the measurement position P in a stable posture by adsorption transport, the measurement light can be reliably emitted to the measurement object M at the measurement position P. Further, since the measurement object M is conveyed while being adsorbed in a state of being placed on and between the conveying belts 15 and 16, the measurement light passes between the conveying belts 15 and 16 and is transmitted only through the measurement object M before being received by the measurement light receiving device 51.

When the object light is received by the measurement light receiving device 51, an output signal of the object light is sent from the measurement light receiving device 51 to the arithmetic device 70. In the arithmetic device 70, the optical property of the measurement object M is measured based on the output signal of the object light received from the measurement light receiving device 51 and the output signal of the reference light received from the reference light receiving device 50, and the acceptability of the measurement object M is determined. The determination result is then sent to the control device 65.

Then, the control device 65 drives the sorting and collecting mechanism of the sorting device 60, based on the determination result received from the arithmetic device 70, so as to collect the good products in the good product collection chamber and collect the defective products in the defective product collection chamber. Further, the control device 65 calculates the time (timing) taken for the measurement object M, which has been detected by the object detection sensor 55, to reach the sorting and collecting mechanism from the detection time point, based on the conveying speed of the measurement object M and the distance between the detection position of the object detection sensor 55 and the sorting and collecting mechanism, and drives the sorting and collecting mechanism at the time when the corresponding measurement object M reaches the sorting and collecting mechanism.

Through the operation as described above, the optical property of each of the measurement objects M, which are successively and randomly conveyed by the conveyance device 10, is successively measured, and the measurement objects M are sorted into good products and defective products based on the measurement results.

In this way, according to the optical measurement device 1 of this example, the measurement light is emitted to the measurement position P and received by the measurement light receiving device 51 only when the measurement object M is present at the measurement position P. In other words, the measurement light can be kept from being emitted to the measurement position P and thus not received by the measurement light receiving device 51 while the measurement object M is not present at the measurement position P. Therefore, it is possible to keep the high-power wavelength-swept light from being directly received by the measurement light receiving device 51, and it is also possible to avoid the measurement light receiving device 51 being damaged due to the wavelength-swept light being directly received by the measurement light receiving device 51.

The effect of the optical measurement device 1 was verified as described below. The beam diameter of the wavelength-swept light (measurement light) to be emitted from the light source device 35 was set to 0.8 mm ($1/e^2$ diameter), and the width of the slit hole of the slit member 44 was set to 2 mm. The distance (evacuation distance) between the illumination optical path and the shielded optical path at the lower surface of the slit member 44 was set to 3 mm.

For each of the illumination optical path and the shielded optical path of the measurement light, the light intensity incident on the measurement light receiving device 51 was measured with the measurement object M absent from the measurement position P. The incident intensity was 58 mW when the optical path was set to the illumination optical path, and the incident intensity was 12 $\mu$W when the optical path was set to the shielded optical path. The incident intensity thus dropped to 0.021%. This is a value sufficiently below the allowable input (damage threshold) of the measurement light receiving device 51.

The width of the slit of the slit member 44 and the evacuation distance can be experimentally determined in consideration of the damage threshold of the measurement light receiving device 51, the beam diameter of the measurement light, and the performance (speed) of the optical path switching unit (galvanometer mirror 42 and motor 43).

While one embodiment of the present invention has been described above, the specific aspects that the present invention can take are not limited in any way to the exemplary aspects.

For example, while the above example adopts a configuration including the slit member 44 that serves as an aperture, the configuration is not limited to this, and may not include such an aperture, as long as the light intensity incident on the measurement light receiving device 51 can be sufficiently lowered, when the optical path of the measurement light is the deflected optical path. However, the presence of an aperture will keep the measurement light from becoming stray light.

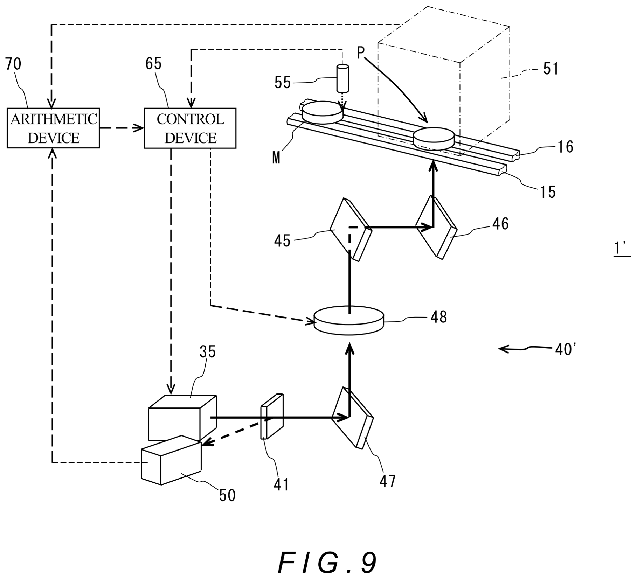

Further, in the above example, the optical path of the measurement light is switched between the illumination optical path and the deflected optical path by the optical path switching unit including the galvanometer mirror 42 and the motor 43. However, the present disclosure is not limited to such a configuration. For example, as shown in FIG. 9, a third mirror 47 may be provided instead of the galvanometer mirror 42, and the slit member 44 may be replaced with an illumination device 41' including a light-shielding member 48 that switches between a transmitting state and a non-transmitting state. The optical measurement device 1' of this example differs from the above-described optical measurement device 1 only in this configuration, and the other configurations are the same as those of the optical measurement device 1. Therefore, in FIG. 9, the same reference characters are given to the configurations that are identical to those of the above-described optical measurement device 1 shown in FIG. 6. Note that the non-transmitting state includes not only a case in which the transmission of light is completely blocked, but also a case in which the amount of transmitted light is reduced.

In this optical measurement device 1', when a measurement object M successively conveyed by the conveyance device 10 is detected by the object detection sensor 55 and a detection signal is received from the object detection sensor 55, the control device 65, as in the above example, calculates the time (timing) required for the measurement object M detected by the object detection sensor 55 to reach the measurement position P from the detection time point, based on the rotation speed of the drive motor 22 detected by the rotary encoder 23. When the calculated time has elapsed, the light-shielding member 48 is switched from the non-transmitting state to the transmitting state.

In this way, the measurement light reflected by the third mirror 47 passes through the light-shielding member 48, is sequentially reflected by the first mirror 45 and the second mirror 46, and enters the measurement object M located at the measurement position P. Thereafter, the measurement light passes through the measurement object M, the measurement light received by the measurement light receiving device 51 as object light. On the other hand, when the light-shielding member 48 is in the non-transmitting state, the measurement light reflected by the third mirror 47 is blocked by the light-shielding member 48. Therefore, the measurement light does not directly reach the measurement position P.

Then, the control device 65 maintains the light-shielding member 48 in a transmitting state until the measurement object M passes the measurement position P, and the control device 65, just before the measurement object M is to pass the measurement position P, switches the light-shielding member 48 to a non-transmitting state again. As a result, the measurement light is emitted to the measurement position P only when the measurement object M is present at the measurement position P, and the measurement light can either be kept from being emitted to the measurement position P while the measurement object M is not present at the measurement position P, or the measurement light emitted to the measurement position P can be reduced.

Thus, with the optical measurement device 1' configured in this way, it is possible to keep the high-power wavelength-swept light from being directly received by the measurement light receiving device 51, and it is also possible to avoid the measurement light receiving device 51 being damaged due to the wavelength-swept light being directly received by the measurement light receiving device 51.

Note that the light-shielding member 48 may be exemplified by a movable shutter or a variable attenuator.

Examples of the variable attenuator include a liquid crystal shutter, an acousto-optic modulator (AOM), and an electro-optic modulator (EOM).

In the above examples, the control device 65 calculates the conveying speed of the measurement object M conveyed by the conveying belts 15 and 16 based on the rotation speed of the drive motor 22 detected by the rotary encoder 23. Based on the calculated conveying speed and the distance between the detection position of the object detection sensor 55 and the measurement position P that has been previously obtained, the control device 65 calculates the time (timing) required for the measurement object M detected by the object detection sensor 55 to reach the measurement position P from the detection time point. However, the estimation of the timing for the measurement object M to reach the measurement position P from the detection time point is not limited to such a method.

For example, as described hereinabove, the rotary encoder 23 detects the rotation angle of the drive motor 22 per unit time. The traveling amount of the conveying belts 15 and 16, that is, the traveling amount of the measurement object M can be detected by the rotary encoder 23. Based on this traveling amount, the timing for the measurement object M to reach the measurement position P from the detection time point may be determined.

[LISTING OF REFERENCE CHARACTERS]

| 1 | Optical Measurement Device |
|---|---|
| 2 | Supply Unit |
| 3 | Hopper |
| 4 | Vibration Feeder |
| 5 | Chute |
| 6 | Alignment Table |
| 10 | Conveyance Device |
| 11 | Suction Box |
| 11a | Through Hole |
| 12 | Slit |
| 13, 14 | Guide Groove |
| 15, 16 | Conveying Belt |
| 17 | Exhaust Pump |
| 18 | Drive Pulley |
| 19, 20, 21 | Driven Pulley |
| 22 | Drive Motor |
| 23 | Rotary Encoder (Speed Detection Sensor) |
| 24 | Cover Body |
| 24a | Through Hole |
| 25 | Glass Plate |
| 30 | Cover Body |
| 35 | Light Source Device |
| 40 | Illumination Device |
| 41 | Beam Splitter |
| 42 | Galvanometer Mirror |
| 43 | Motor |
| 44 | Slit Member |
| 45 | First Mirror |
| 46 | Second Mirror |
| 50 | Reference Light Receiving Device |
| 51 | Measurement Light Receiving Device |
| 55 | Object Detection Sensor |
| 60 | Sorting Device |
| 65 | Control Device |
| 70 | Arithmetic Device |

## Claims

1. An optical measurement device, comprising:

   a light source device configured to generate wavelength-swept light;
   a conveyance device having two endless annular conveying belts that are arranged to face each other and form a linear conveyance path, and a driving unit configured to rotate the conveying belts, the conveyance device being configured to convey, along the conveyance path, measurement objects in a state of being placed on and between the two conveying belts;
   an illumination device establishing an optical path that guides the wavelength-swept light generated by the light source device to a measurement position set on the conveyance path and irradiates the measurement position with the wavelength-swept light, and having an optical path switching unit that is provided on the optical path and configured to switch the optical path of the wavelength-swept light;
   a light receiving device configured to receive the wavelength-swept light directed to the measurement position by the illumination device;
   an object detection sensor provided upstream of the measurement position in a conveying direction of the conveyance device, and configured to detect a measurement object conveyed by the conveyance device;
   a conveyance detection sensor configured to detect a change in the conveying speed of the conveying belts or a displacement in the conveying direction; and
   a control device configured to control a driving unit of the conveyance device and the optical path switching unit of the illumination device,
   wherein the control device determines a timing at which the measurement object reaches the measurement position, based on detection by the object detection sensor and on a change in the conveying speed or a displacement in the conveying direction detected by the conveyance detection sensor, controls the optical path switching unit in sync with the determined timing so that the optical path is set such that the wavelength-swept light is received by the light receiving device while the measurement object is present at the measurement position, however, the optical path is set such that the wavelength-swept light is not received by the light receiving device while the measurement object is not present at the measurement position.

2.  The optical measurement device according to claim 1, wherein the optical path switching unit comprises any of a galvanometer mirror, a Micro Electro Mechanical Systems (MEMS) mirror, a piezo-driven mirror, or a polygon mirror.

3.  The optical measurement device according to claim 2, wherein the illumination device further comprises an aperture on an emission side of the optical path switching unit.

4.  An optical measurement device, comprising:

    a light source device configured to generate wavelength-swept light;
    a conveyance device having two endless annular conveying belts that are arranged to face each other and form a linear conveyance path, and a driving unit configured to rotate the conveying belts, the conveyance device being configured to convey, along the conveyance path, measurement objects in a state of being placed on and between the two conveying belts;
    an illumination device establishing an optical path that guides the wavelength-swept light generated by the light source device to a measurement position set on the conveyance path and irradiates the measurement position with the wavelength-swept light, and having a light shielding unit that is provided on the optical path and configured to switch between transmission and non-transmission of the wavelength-swept light;
    a light receiving device configured to receive the wavelength-swept light directed to the measurement position by the illumination device;
    an object detection sensor provided upstream of the measurement position in a conveying direction of the conveyance device, and configured to detect a measurement object conveyed by the conveyance device;
    a conveyance detection sensor configured to detect a change in the conveying speed of the conveying belts or a displacement in the conveying direction; and
    a control device configured to control a driving unit of the conveyance device and the light shielding unit of the illumination device,
    wherein the control device determines a timing at which the measurement object reaches the measurement position, based on detection by the object detection sensor and on a change in the conveying speed or a displacement in the conveying direction detected by the conveyance detection sensor, controls the light shielding unit in sync with the determined timing so that the light shielding unit is in a transmitting state while the measurement object is present at the measurement position, however, the light shielding unit is in a non-transmitting state while the measurement object is not present at the measurement position.

5.  The optical measurement device according to claim 4, wherein the light shielding unit comprises any of a movable shutter or a variable attenuator.

6.  The optical measurement device according to claim 5, wherein the variable attenuator comprises any of a liquid crystal shutter, an acousto-optic modulator, or an electro-optic modulator.

7.  The optical measurement device according to any one of claims 1 to 6, wherein the wavelength-swept light passes between the two conveying belts and is directed to the measurement object.

FIG.1

EP 4 745 559 A1

FIG.2

CONTROL DEVICE — 65

ARITHMETIC DEVICE — 70

F I G . 3

EP 4 745 559 A1

F I G . 4

EP 4 745 559 A1

FIG.5

FIG. 6

INTENSITY-TIME WAVEFORM OF THE WAVELENGTH-SWEPT LIGHT

$I_{WS}(t)$

$\lambda_1$ $\lambda_2$ ... $\lambda_n$

WAVELENGTH-TIME WAVEFORM OF THE WAVELENGTH-SWEPT LIGHT

$\lambda_1$ $\lambda_n$ $t_1$ $t_2$ $t$

*FIG. 7*

*F I G . 8*

EP 4 745 559 A1

F I G . 9

EP 4 745 559 A1

FIG.10

# EP 4 745 559 A1

## INTERNATIONAL SEARCH REPORT

International application No.

**PCT/JP2024/019555**

| A. | CLASSIFICATION OF SUBJECT MATTER |
|---|---|

*G01N 21/3563*(2014.01)i; *B07C 5/342*(2006.01)i; *G01J 3/42*(2006.01)i; *G01N 21/85*(2006.01)i; *B65G 15/58*(2006.01)n
FI:   G01N21/3563; G01J3/42 Z; G01N21/85 A; B07C5/342; B65G15/58 B

According to International Patent Classification (IPC) or to both national classification and IPC

| B. | FIELDS SEARCHED |
|---|---|

Minimum documentation searched (classification system followed by classification symbols)

G01N 21/00-21/01; G01N 21/17-21/61; G01N 21/84-21/958; G01J 3/00-3/51; G01N 35/00-35/10; G01B 11/00-11/30; A61J 3/06; B07C 5/342; B65B 57/00-57/20; B65G 15/00-15/64; B65H 5/22; G02B 5/00; G02F 1/13; G02F 1/29; G12B 17/00; G12B 17/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-160819 A (USHIO ELECTRIC INC.) 20 October 2022 (2022-10-20) paragraphs [0002], [0004], [0006], [0027]-[0048], [0068]-[0083], fig. 1-3, 11 | 1-7 |
| Y | JP 2015-166053 A (DAIICHI JITSUGYO VISWILL CO., LTD.) 24 September 2015 (2015-09-24) paragraphs [0032], [0036]-[0045], [0050]-[0053], fig. 1-6 | 1-7 |
| Y | JP 62-095448 A (KOWA CO., LTD.) 01 May 1987 (1987-05-01) page 3, upper left column, line 19 to upper right column, line 19, fig. 1 | 1-3 |
| A | JP 2021-089283 A (LOCKHEED MARTIN CORP.) 10 June 2021 (2021-06-10) entire text, fig. 1A-5 | 1-7 |
| A | JP 2019-164070 A (CANON KABUSHIKI KAISHA) 26 September 2019 (2019-09-26) entire text, fig. 1-11 | 1-7 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 August 2024** | **20 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/019555** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2011-147966 A (SUMITOMO ELECTRIC INDUSTRIES, LTD.) 04 August 2011 (2011-08-04) entire text, fig. 1-4 | 1-7 |
| A | JP 11-051928 A (KUBOTA CORPORATION) 26 February 1999 (1999-02-26) entire text, fig. 1-7 | 1-7 |
| A | JP 09-074848 A (TOYO NOKI K.K.) 25 March 1997 (1997-03-25) entire text, fig. 1-14 | 1-7 |
| A | JP 09-079978 A (ISHIKAWAJIMA HARIMA HEAVY IND CO., LTD.) 28 March 1997 (1997-03-28) entire text, fig. 1-9 | 1-7 |
| A | JP 08-274941 A (FUJI PHOTO FILM CO., LTD.) 18 October 1996 (1996-10-18) entire text, fig. 1-7 | 1-7 |
| P, A | JP 2023-179208 A (USHIO ELECTRIC INC.) 19 December 2023 (2023-12-19) entire text, fig. 1-10 | 1-7 |

Form PCT/ISA/210 (second sheet) (July 2022)

**INTERNATIONAL SEARCH REPORT**
Information on patent family members

International application No.

**PCT/JP2024/019555**

| Patent document cited in search report | | | Publication date (day/month/year) | Patent family member(s) | | | Publication date (day/month/year) |
|---|---|---|---|---|---|---|---|
| JP | 2022-160819 | A | 20 October 2022 | US | 2024/0110866 | A1 | |
| | | | | paragraphs [0002], [0004]-[0005], [0036]-[0057], [0078]-[0094], fig. 1-3, 11 | | | |
| | | | | WO | 2022/215453 | A1 | |
| | | | | CN | 117098986 | A | |
| JP | 2015-166053 | A | 24 September 2015 | (Family: none) | | | |
| JP | 62-095448 | A | 01 May 1987 | (Family: none) | | | |
| JP | 2021-089283 | A | 10 June 2021 | US | 2021/0172790 | A1 | |
| | | | | EP | 3832275 | A1 | |
| JP | 2019-164070 | A | 26 September 2019 | US | 2019/0293570 | A1 | |
| | | | | KR | 10-2019-0110448 | A | |
| JP | 2011-147966 | A | 04 August 2011 | (Family: none) | | | |
| JP | 11-051928 | A | 26 February 1999 | (Family: none) | | | |
| JP | 09-074848 | A | 25 March 1997 | (Family: none) | | | |
| JP | 09-079978 | A | 28 March 1997 | (Family: none) | | | |
| JP | 08-274941 | A | 18 October 1996 | (Family: none) | | | |
| JP | 2023-179208 | A | 19 December 2023 | WO | 2023/238654 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020159973 A